# DEMANDE DE BREVET EUROPEEN

(11) **EP 1 348 337 A1**
(43) Date de publication de la demande: **01.10.2003**
(21) Numéro de dépôt: 03075876.7
(22) Date de dépôt: 27.03.2003
(51) Int. Cl.: A21D 13/08, A21D 8/06

(54) **Procédé de fabrication d'un biscuit**

(30) Priorité: 27.03.2002 BE 200200224
(71) Demandeur: Barnico Holding S.A., 1637 Luxembourg (LU)
(72) Inventeur:
(74) Mandataire: Quintelier, Claude

(57) **Abrégé**

Procédé de fabrication d'un biscuit comprenant une formation d'une pâte à biscuit ayant comme ingrédients entre 20 et 60 % d'un broyage d'amandes, entre 30 et 60 % de sucre, et entre 10 et 40 % de blanc d'oeuf dans lequel ledit procédé comprend les étapes suivantes : faire durcir la pâte à une température comprise entre 150 et 200°C entre 15 et 30 minutes ; hydrater et ramollir en plaçant la pâte additionnée de son fourrage sous atmosphère humide ayant un degré d'hygrométrie supérieur à 40 % et une température inférieure à 6°C de manière à ce que la pâte cuite s'hydrate.

## Description

La présente invention est relative à un procédé de fabrication d'un biscuit comprenant une formation d'une pâte à biscuit ayant comme ingrédients exprimés en poids total de la pâte entre 20 et 60 % d'un broyage d'amandes, entre 30 et 60 % de sucre, et entre 10 et 40 % de blanc d'oeuf, lequel procédé comprend les étapes de mélanger de manière homogène les ingrédients de la pâte, déposer la pâte en portions sur un support, enfourner ledit support et la pâte dans un four préchauffé entre 160 et 200°C,

Un tel procédé est en outre appliqué pour la fabrication de macarons. Le macaron est un petit gâteau rond fait à base d'amandes pilées, de sucre et de blanc d'oeuf, plus ou moins moelleux selon le dosage des ingrédients, qui peut être parfumé à la vanille, au café, au chocolat, etc. Ces petits gâteaux, apparus au début du XX^{ème} siècle, sont en général placés de part et d'autre d'un fourrage par exemple de la ganache ou d'une crème au beurre arômatisée.

Sa méthode de fabrication datant de cette même époque, consiste à cuire modérément un mélange des ingrédients cités ci-dessus de manière à conserver le caractère moelleux donné par les blancs d'oeufs, à laisser refroidir les macarons cuits pour ensuite les placer de part et d'autre d'un fourrage. Bien que ces biscuits soient toujours fort appréciés par le consommateur, il n'empêche que ce dernier apprécie quand même de nouveaux biscuits.

L'invention a pour but de satisfaire aux volontés du consommateur qui veut d'autres types de biscuits afin de varier ses plaisirs.

Dans ce but, il est prévu, suivant l'invention, un procédé de fabrication d'un biscuit du type macaron caractérisé en ce que ledit procédé comprend de plus les étapes suivantes :
- cuire les portions de la pâte à une température comprise entre 150 et 200°C pendant une période située entre 15 et 30 minutes de manière à faire durcir la pâte,
- faire refroidir la pâte cuite,
- placer au moins une face d'un fourrage en contact avec au moins une portion de la pâte cuite,
- hydrater et ramollir en plaçant les portions de pâte additionnées de leur fourrage sous atmosphère humide ayant un degré d'hygrométrie supérieur à 40 % et une température inférieure à 6°C pendant une période de temps prédéterminée de manière à ce que la pâte cuite s'hydrate et se ramollisse.

Ladite invention se distingue et va même à l'encontre des procédés traditionnels de fabrication des macarons en cuisant la pâte non plus de manière à conserver son moelleux, mais au contraire, de manière à faire durcir ce mélange à la cuisson. La pâte cuite sera, une fois refroidie et placée en contact avec le fourrage, placée sous atmosphère humide de manière à être réhydratée et à obtenir un caractère moelleux. La pâte cuite, ayant été beaucoup plus déshydratée que dans les procédés de fabrication traditionnels, présente une plus grande hydroscopicité, ce qui lui permettra d'absorber une partie du fourrage de manière à ce que le goût du fourrage puisse imprégner en partie le biscuit.

Suivant une forme de réalisation préférentielle de l'invention, le fourrage, avant d'être placé en contact avec la pâte cuite, est préalablement congelé et ramolli sur une fine pellicule en surface de ladite au moins une face du fourrage, de manière à ce que ladite face du fourrage adhère à la pâte cuite. De cette manière, le ramollissement permettra à la pâte cuite d'absorber de manière plus progressive une partie du fourrage, tout en étant réhydratée sous atmosphère humide.

D'autres formes de réalisation de ce procédé de fabrication sont indiquées dans les revendications annexées.

L'invention va à présent être décrite de manière plus détaillée à l'aide d'un exemple de réalisation non limitatif.

### Exemple

Le biscuit est fabriqué à partir d'un mélange ayant comme ingrédients, exprimés en poids total de la pâte, entre 20 et 60 % d'un broyage d'amandes, de préférence 36 %; entre 30 et 60 % de sucre, de préférence 39 %; entre 10 et 40 % de blanc d'oeuf, de préférence 22 % et comprenant de plus 2 % d'arôme en particulier de cacao ou de café ou encore de fruit et 1 % de sirop ayant un indice au réfractomètre entre 20 et 50 %, de préférence de 30 %. Par "broyage d'amande", on entend: des amandes broyées en poudre.

La pâte est homogénéisée manuellement ou grâce à un mélangeur électrique. La pâte est ensuite par exemple placée dans une douille grâce à laquelle elle est divisée en petites portions qui sont alors placées sur un support recouvert d'une feuille de papier sulfurisé. Les petites portions étant chaque fois écartées les unes des autres pour compenser le gonflement du mélange lors de la cuisson. Ledit support, qui peut par exemple être en métal, est enfourné dans un four préchauffé entre 160 et 200°C, de préférence à 185°C. Les portions sont alors cuites à cette température pendant une durée allant entre 15 et 30 minutes, dans ce cas-ci par exemple pendant environ 25 minutes pour les faire durcir considérablement.

Le support métallique est sorti du four pour laisser refroidir à température ambiante les petites portions durcies par la cuisson.

Le fourrage est fabriqué à partir d'une cuisson comprenant un mélange d'oeuf, de crème, de lait et de sucre. De manière à cuire ce mélange d'oeuf, de crème, de lait et de sucre, celui-ci est disposé dans un ou plusieurs moules de préférence en silicone comprenant de petites cavités destinées à recevoir chacune une quantité prédéterminée de ce mélange d'oeuf, de crème, de lait et de sucre. Le ou les moules est (ou sont) ensuite placé(s) au four et, après cuisson, le ou les moules est (ou sont) refroidi(s) pour être placé(s) ensuite au congélateur afin de congeler le fourrage et de le maintenir dans cet état .

Une fois congelé, le fourrage est démoulé et ensuite ramolli sur une fine pellicule de par exemple 1 mm d'épaisseur sur deux côtés opposés. Le fourrage est ensuite placé, sur au moins une face, en contact avec au moins une portion en pâte cuite. De la même manière et selon une autre forme de réalisation de l'invention, le fourrage est ensuite placé en sandwich entre deux portions de pâte cuite et refroidi, la fine pellicule ramollie entrant en contact avec le mélange permet une meilleure adhérence des petites portions de mélange avec le fourrage.

Suivant une autre forme de réalisation, on pourrait placer les petites portions de pâte cuite ayant une température comprise entre 40 et 70°C en contact avec le fourrage congelé, de manière à ce que lorsque les portions de pâte entrent en contact avec le fourrage congelé, le ramollissement de la fine pellicule de fourrage se produise grâce à la chaleur de la portion de pâte encore chaude.

Le biscuit, ainsi achevé, est ensuite placé au frigo à 4°C pendant de préférence environ 24 heures sous une atmosphère humide ayant un degré d'hygrométrie à 75 %. Le nombre d'heures et le degré d'hygrométrie sont liés l'un à l'autre de telle façon que plus le degré d'hygrométrie est bas, plus la période sous atmosphère humide devra être longue et inversement. Le degré d'hygrométrie se situe de préférence entre 40 et 95%

A ce moment, les portions de pâte cuite sont, par leur cuisson prolongée, comme des sortes d'éponges sèches soumises à un phénomène d'hydratation compétitive produit par, d'une part, l'humidité du fourrage et, d'autre part, l'humidité ambiante. Dans le processus d'hydratation, le degré d'hygrométrie du frigo joue donc le rôle de réguler en partie l'hydratation des portions de pâte cuite.

De cette manière, le fourrage lors de sa décongélation, et par, entre autres, un phénomène de capillarité, va imprégner les portions de pâte cuite ce qui va provoquer leur hydratation et leur ramollissement sur une partie proche de la zone de contact entre le fourrage et les portions de pâte cuite. De même, l'humidité ambiante d'une part empêche le séchage du fourrage sur les zones non protégées par les portions de pâte cuite et d'autre part permet un ramollissement des bords du biscuit.

La portion de pâte cuite, suivant la présente invention, est beaucoup plus cuite et donc plus déshydratée que les autres mélanges suivant les procédés traditionnels de fabrication de macarons, ce qui donne à la portion de pâte cuite une plus grande capacité d'absorption. Le fourrage sera donc assimilé de manière plus profonde dans la portion de pâte cuite, octroyant au biscuit un gradient de concentration en fourrage. Le goût du fourrage étant peu prononcé à partir de l'extrémité de la portion de pâte cuite pour augmenter au maximum dans le fourrage même, et ensuite diminuer sur l'extrémité de l'autre portion de pâte cuite.

## Revendications

1. Procédé de fabrication d'un biscuit comprenant une formation d'une pâte à biscuit ayant comme ingrédients exprimés en poids total de la pâte entre 20 et 60 % d'un broyage d'amandes, entre 30 et 60 % de sucre, et entre 10 et 40 % de blanc d'oeuf, lequel procédé comprend les étapes de mélanger de manière homogène les ingrédients de la pâte, déposer la pâte en portions sur un support, enfourner ledit support et la pâte dans un four préchauffé entre 160 et 200°C, **caractérisé en ce que** ledit procédé comprend de plus les étapes suivantes :
- cuire les portions de la pâte à une température comprise entre 150 et 200°C pendant une période située entre 15 et 30 minutes de manière à faire durcir la pâte,
- faire refroidir la pâte cuite,
- placer au moins une face d'un fourrage en contact avec au moins une portion de la pâte cuite,
- hydrater et ramollir en plaçant les portions de pâte additionnées de leur fourrage sous atmosphère humide ayant un degré d'hygrométrie supérieur à 40 % et une température inférieure à 6°C pendant une période de temps prédéterminée de manière à ce que la pâte cuite s'hydrate et se ramollisse.

2. Procédé de fabrication d'un biscuit, suivant la revendication 1, **caractérisé en ce qu'**avant de placer ledit fourrage en contact avec la pâte cuite, le procédé comprend les étapes de :
- congélation du fourrage,
- ramollir une pellicule en surface sur au moins une face du fourrage, de manière à ce que cette face de fourrage adhère à la pâte cuite.

3. Procédé de fabrication d'un biscuit, suivant la revendication 1 ou 2, **caractérisé en ce que** le fourrage est préalablement préparé à base d'oeuf, de crème, sucre et de lait mélangés et cuit dans un moule, lequel fourrage est congelé après cuisson.

4. Procédé de fabrication d'un biscuit suivant l'une des revendications 1 à 3, **caractérisé en ce que** le fourrage est placé en sandwich entre deux portions de pâte cuite.

5. Procédé de fabrication d'un biscuit suivant l'une des revendications 1 à 4, **caractérisé en ce que** la formation de la pâte comprend l'addition d'arôme aux ingrédients.

6. Procédé de fabrication d'un biscuit suivant l'une des revendications 1 à 5, **caractérisé en ce que** la formation de la pâte comprend l'addition aux ingrédients de sirop sucré ayant un indice au réfractomètre entre 20 % et 50 %.

7. Procédé de fabrication d'un biscuit suivant l'une des revendications 1 à 6 , **caractérisé en ce qu'**avant d'être mise en contact avec le fourrage, la pâte cuite est refroidie jusqu'à une température de 40 à 70 °C.
